# EUROPÄISCHE PATENTANMELDUNG

(11) **EP 2 052 837 A2**
(43) Veröffentlichungstag der Anmeldung: **29.04.2009**
(21) Anmeldenummer: 08015517.9
(22) Anmeldetag: 03.09.2008
(51) Int. Cl.: B29C 47/06, B29C 47/26

(54) **Koextrusions-Düsenkopf**

(30) Priorität: 24.10.2007 DE 102007051131
(71) Anmelder: Sonderhoff Engineering GmbH, 6912 Hörbranz (AT)
(72) Erfinder: Hausbichler, Hannes, 6900 Bregenz (AT)
(74) Vertreter: Hennicke, Ernst Rüdiger

(57) **Zusammenfassung**

Der erfindungsgemäße Koextrusions-Düsenkopf (10) dient für die Koextrusion zweier konzentrisch zueinander auszubringender Dichtungsmaterialien und hat eine Auslassdüse mit zwei Anschlüssen für zwei Materialzuleitungen sowie zwei konzentrisch zueinander an einer Auslassdüse angeordnete Auslasskanülen, wobei jede Auslasskanüle mit einer der beiden Materialzuleitungen kommuniziert. Um einen schnellen Austausch beider Auslasskanülen zu ermöglichen, schlägt die Erfindung vor, dass beide Auslasskanülen (16, 17) von der Auslassseite (21) der Auslassdüse (11) auswechselbar am Düsenkopf (10) angeordnet sind.

## Beschreibung

Die Erfindung betrifft einen Koextrusions-Düsenkopf insbesondere für die Koextrusion zweier konzentrisch zueinander auszubringender Dichtungsmaterialien, mit einer Auslassdüse mit einem ersten, einlassseitigen Anschluss für eine erste Materialzuleitung und einem zweiten, einlassseitigen Anschluss für eine zweite Materialzuleitung sowie mit zwei unter Bildung eines Ringspaltes konzentrisch zueinander an der Auslassdüse angeordneten oder diese bildenden Auslasskanülen, von denen die innere Kanüle mit ihrem Einlassende mit dem ersten einlassseitigen Anschluss und die äußere Kanüle mit ihrem Einlassende mit dem zweiten einlassseitigen Anschluss kommuniziert.

Es ist bekannt, Dichtungen durch Koextrusion eines inneren Dichtungsstranges und eines diesen vollständig umschließenden Dichtungsmantels herzustellen, wobei die Materialen für den inneren Dichtungsstrang und den diese umgebenden Mantel meist verschieden sind, um verschiedenen Anforderungen an die Dichtung gerecht zu werden. So ist es beispielsweise möglich, zur elektromagnetischen Abschirmung von Gehäusen, an denen die Dichtung angebracht wird, die äußere Dichtungsschicht aus einem elektrisch gut leitenden Dichtungsmaterial herzustellen, während der innere Dichtungsstrang vielleicht eine besonders hohe Kompressibilität aufweist und damit der Dichtung in ihrer Gesamtheit mechanische Eigenschaften verleiht, die in dieser Güte allein von dem Material der äußeren Dichtungsschicht nicht erreicht werden können.

Eine derartige, koextrudierte Dichtung wird gemäß der DE 100 39 068 B4 mit Hilfe einer gattungsgemäßen Vorrichtung hergestellt, bei der die beiden konzentrisch zueinander angeordneten, zwischen sich einen Ringspalt bildenden Auslasskanülen in einem gemeinsamen Düsenkopf aufgenommen sind. Die Anordnung ist dort so getroffen, dass die innere Kanüle in einen ersten Einsatz eingesetzt ist und mittels dieses ersten Einsatzes von der Zuführseite der Dichtungsmaterialien in eine erste Bohrung des Düsenkopfes einsetzbar ist, während die zweite Kanüle mit größerem Durchmesser in einen zweiten Einsatz eingesetzt ist und mittels dieses zweiten Einsatzes von der Austrittsseite am Düsenkopf einsetzbar ist. Um bei dieser bekannten Vorrichtung die erste Kanüle mit ihrem sie tragenden Einsatz montieren zu können, ist es erforderlich, die Vorrichtung weitestgehend zu demontieren, insbesondere die Materialzuleitung für das durch die innere Kanüle zugeführte Dichtungsmaterial für den inneren Dichtungsstrang vom Düsenkopf zu trennen, um Zugang zu der den Einsatz der inneren Kanüle aufnehmenden Bohrung zu schaffen. Ein Austausch insbesondere der inneren Kanüle ist daher mit vergleichsweise hohem Zeit- und Arbeitsaufwand verbunden und macht regelmäßig vor Durchführung der Arbeiten eine Reinigung/Rückspülung nicht nur des Düsenkopfes, sondern auch der Materialleitungen erforderlich, um zu verhindern, dass Dichtungsmaterial, dass sich während der Wartungsarbeiten in den Leitungen befindet, dort aushärtet und die Leitungen verstopft.

Aufgabe der Erfindung ist es, einen Düsenkopf der eingangsgenannten Art so zu verbessern, dass der Zugang zu den Auslasskanülen erleichtert wird und diese beide schnell ausgetauscht werden können, ohne dass es erforderlich ist, hierzu eine oder gar beide Materialzuleitungen vom Düsenkopf zu trennen oder gar rückzuspülen. Diese Aufgabe wird mit der Erfindung dadurch gelöst, dass beide Auslasskanülen von der Auslassseite der Auslassdüse her auswechselbar am Düsenkopf angeordnet sind.

Diese Ausgestaltung hat den Vorteil, dass die Materialzuleitungen am Düsenkopf angeschlossen bleiben können, denn beide Auslasskanülen sind gleichermaßen von der Auslassseite des Düsenkopfes zugänglich und können in bevorzugter Ausgestaltung der Erfindung auch unabhängig voneinander aus- und eingebaut werden.

Vorteilhaft ist es, wenn die innere Kanüle von der Auslassseite des Düsenkopfes her mit ihrem Einlassende in einen ersten, im Düsenkopf im Bereich von dessen ersten einlassseitigem Anschluss und/oder der daran angeschlossen Materialzuleitung ausgebildetem Kanülensitz montierbar ist. Dabei kann der Kanülensitz als Stufenbohrung ausgebildet sein und die innere Kanüle kann an ihrem Einlassende eine Abstufung aufweisen, mit der sie in den Kanülensitz einschiebbar oder einschraubbar ist. Die Abstufung in Kombination mit dem bevorzugt ebenfalls gestuften Kanülensitz stellt dann einen Tiefenanschlag für die innere Kanüle dar, die somit bei ihrer Montage am Düsenkopf auch ohne aufwendige Messvorrichtungen oder dgl. immer korrekt montiert werden kann.

Vorzugsweise ist die innere Kanüle im Bereich ihres Einlassendes gegenüber dem Kanülensitz und/oder dem ersten einlassseitigen Anschluss abgedichtet, so dass kein Dichtungsmaterial, das durch die erste Materialleitung dem ersten einlassseitigen Anschluss zugeführt wird, zwischen die innere Kanüle und deren Kanülensitz eindringen kann, sondern den Düsenkopf vollständig durch die innere Kanüle wieder verlässt. Eine derartige Abdichtung kann in besonders zuverlässiger, konstruktiv einfacher Weise durch mindestens einen umlaufenden Dichtring, insbesondere einen O-Ring erfolgen, der beispielsweise zwischen der Auslassdüse und dem daran angeschlossenen ersten, einlassseitigen Anschluss in einer umlaufenden Nut eingelegt ist und sich beim Einschub der ersten Kanüle in den Kanülensitz an deren Einlassende dichtend anlegt. Es ist in jedem Fall vorteilhaft, wenn die Abdichtung im Bereich der Abstufung am Kanülensitz und/oder der inneren Kanüle angeordnet ist.

Die äußere Kanüle kann von der Auslassseite des Düsenkopfes her mit ihrem Einlassende in einem zweiten, im Düsenkopf konzentrisch zur ersten Kanüle ausgebildeten Kanülensitz montierbar sein, der in besonders bevorzugter Ausführungsform der Erfindung eine Gewindebohrung aufweist, in welche die zweite Kanüle einschraubbar ist. Hierdurch lässt sich eine schnelle Montage oder Demontage der zweiten Kanüle erreichen, die hierzu einfach mit einem äußeren Gewindeabschnitt versehen ist, mit dem sie in die Gewindebohrung ein- oder aus dieser herausgeschraubt werden kann.

Die zweite Materialzuleitung verläuft vorzugsweise schräg zur Achse der Kanülen und mündet unter einem stumpfen Winkel in den zweiten Kanülensitz. Je kleiner dieser Winkel zwischen der Achse der Kanülen und der Materialzuleitung zur zweiten, die erste Kanüle ringförmig umgebenden Kanüle ist, desto schneller kann sich das zugeführte (Dichtungs-) Material gleichmäßig über den vollen Ringquerschnitt verteilen und desto kürzer können beide Kanülen gewählt werden.

Vorzugsweise ist die erste Kanüle in ihrer axialen und/oder radialen Lage relativ zur zweiten Kanüle arretierbar, so dass die korrekte, konzentrische Ausrichtung der Kanülen zueinander nicht nur leicht eingestellt werden kann, sondern auch im Betrieb des Düsenkopfes dauerhaft erhalten bleibt. Zur Einstellung der radialen Lage der Kanülen zueinander hat sich eine Konstruktion als besonders einfach und zuverlässig bewährt, bei der die zweite Kanüle mit mindestens einem radial gegen die Außenwand der ersten, inneren Kanüle anstellbaren Stellelement, insbesondere einer Stellschraube versehen ist, mit deren Hilfe die Dicke des Ringspaltes genau eingestellt werden kann. Vorzugsweise sind wenigstens zwei Stellelemente, zweckmäßig drei Stellelemente gleichmäßig über den Umfang verteilt an der zweiten Kanüle angeordnet.

Mit der Erfindung ist es leicht möglich, erste und/oder zweite Kanülen unterschiedlichen Innen- und/oder Außendurchmessers im Bereich ihrer Auslassenden vorzusehen, die je nach Anforderung an die Abmessungen der herzustellenden, koextrudierten Dichtung, insbesondere dem Verhältnis von Durchmesser des inneren Dichtungsstranges zur Wandstärke des diesen umgebenden Mantels und/oder in Abhängigkeit von den eingesetzten Materialien gewählt werden und binnen kürzester Zeit am Düsenkopf gegen andere Kanülen ausgetauscht werden können.

Weitere Vorteile und Merkmale der Erfindung ergeben sich aus der nachfolgenden Beschreibung und der Zeichnung, worin eine bevorzugte Ausführungsform der Erfindung anhand eines Beispiels näher erläutert ist. Es zeigt:
- Fig. 1: einen Koextrusions-Düsenkopf nach der Erfindung im Axialschnitt; und
- Fig. 2: eine Einzelheit A des Düsenkopfes nach Fig. 1 im Bereich des Kanülensitzes für die innere Kanüle.

Der in der Zeichnung mit seiner Gesamtheit mit 10 bezeichnete Koextrusions-Düsenkopf weist einen Düsenkörper 11 mit einem ersten, einlassseitigen Anschluss 12 für eine erste Materialzuleitung 13 und einem zweiten, einlassseitigen Anschluss 14 für eine zweite Materialzuleitung 15 auf. Auslassseitig sind an dem Düsenkörper zwei Auslasskanülen 16, 17 konzentrisch zueinander unter Bildung eines Ringspaltes 18 montiert, von denen die innere Kanüle 16 mit ihrem Einlassende 19 mit dem ersten Anschluss 12 und die äußere Kanüle 17 mit ihrem Einlassende 20 mit dem zweiten einlassseitigen Anschluss 14 kommuniziert. Düsenkörper 11, die beiden daran angeordneten Anschlüsse 12, 14 für die Materialzuleitungen 13, 15 sowie die beiden in den Düsenkörper 11 eingesetzten, konzentrisch zueinander ausgerichteten Kanülen 16, 17 bilden zusammen eine Auslassdüse für die dem Düsenkopf von den Materialzuleitungen zugeführten Dichtungsmaterialien, die gleichzeitig am Auslass der beiden Kanülen unter Bildung eines inneren Dichtungsstranges aus einem Dichtungsmaterial und eines diesen umgebenden Mantels aus einem anderen Dichtungsmaterial extrudiert werden.

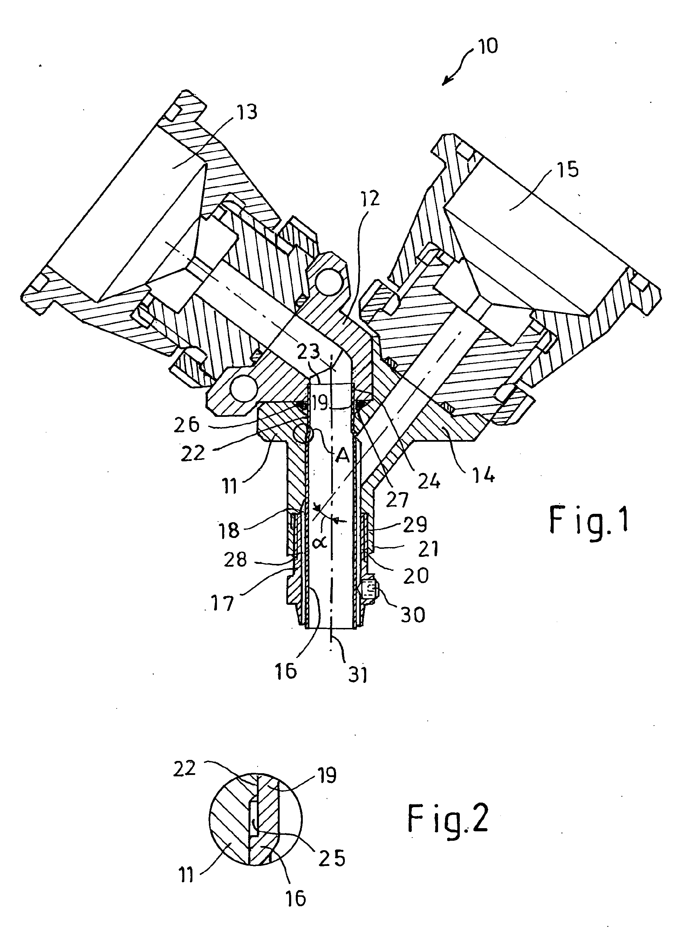

Man erkennt, dass beide Auslasskanülen 16, 17 von der Auslassseite 21 der Auslassdüse her auswechselbar am Düsenkopf angeordnet sind. Hierzu ist die innere Kanüle 16 von der Auslassseite 21 des Düsenkopfes mit ihrem Einlassende 19 in einen ersten, im Düsenkörper 11 und dem daran befestigten Anschluss 12 ausgebildeten Kanülensitz 22 eingesteckt, wobei sie mit ihrem stirnseitigen Rand 23 an einem Absatz des als Stufenbohrung 24 ausgebildeten Kanülensitzes 22 anliegt. Die innere Kanüle 16 ist im Bereich ihres Einlassendes 19 auch selbst mit einer Abstufung 25 versehen (Fig. 2) mit der sie in den Kanülensitz 22 einschiebbar ist. Zur Abdichtung der inneren Kanüle 16 im Bereich ihres Einlassendes 19 gegenüber dem Kanülensitz 22 ist ein O-Ring 26 vorgesehen, der in eine zwischen dem Düsenkörper 11 und dem ersten Anschluss 12 ausgebildete, umlaufende Nut 27 eingelegt ist und sich beim Einschieben der inneren Auslasskanüle dicht an den das Einlassende bildenden, abgestuften Bereich 25 anlegt, so dass kein durch die erste Materialzuleitung zugeführtes Dichtungsmaterial an der Außenseite der inneren Kanüle vorbei in den Ringspalt 18 gelangen kann. Der O-Ring dichtet die innere Kanüle nicht nur zuverlässig ab, sondern sorgt auch für deren sicheren (axialen) Halt der Kanüle in ihrem Kanülensitz 22.

Die äußere Kanüle 17 ist ebenfalls von der Auslassseite 21 des Düsenkopfes montierbar. Hierzu ist sie im Bereich ihres Einlassendes 20 mit einem Außengewinde 28 versehen, mit dem sie in eine am Düsenkörper 11 ausgebildete Gewindebohrung einschraubbar ist, wobei sie die im Düsenkopf bereits aufgenommene, innere Kanüle 16 konzentrisch umgibt, so dass der Ringspalt 18 zwischen den beiden Kanülen über den gesamten Umfang eine zumindest im Wesentlichen gleichmäßige Dicke aufweist. Um die beiden Kanülen in ihrer relativen Lage in Radialrichtung zueinander einzustellen und die Beibehaltung dieser Lage während der Verwendung des Düsenkopfes sicherzustellen, sind an der äußeren Kanüle 17 drei gleichmäßig über den Umfang verteilt angeordnete Stellschrauben 30 quer zur Achsrichtung der Kanülen vorgesehen, von denen in der Zeichnung lediglich eine Stellschraube dargestellt ist. Die Stellschrauben können gegen die Außenwand der inneren Kanüle angestellt werden, um so deren Ausrichtung im Auslassbereich der Düse einzujustieren. Zugleich tragen die drei gegen den Außenumfang der inneren Kanüle angestellten Stellschrauben zur Arretierung der inneren Kanüle im Düsenkopf bei.

Man erkennt, dass die zweite Materialzuleitung 15 schräg zur Achse 31 der Kanülen verläuft und unter einem stumpfen Winkel α in dem zweiten Kanülensitz bzw. dem von den beiden Kanülen gebildeten Ringraum mündet. Die Anordnung ist in jedem Fall so getroffen, dass die Länge der Kanülen bzw. des von diesen gebildeten Ringraums und der Zuströmwinkel der zweiten Materialzuleitung so bemessen sind, dass das durch diese zweite Leitung zuströmende Material vor seinem Austritt an der Auslassseite der Kanülen den Ringraum über dessen gesamten Umfang ausfüllt und somit den von dem ersten Material gebildeten, inneren Materialstrang vollständig umschließt, wenn die Dichtung den Düsenkopf verlässt. Die Länge der Kanülen ist hierbei abhängig von der Art der eingesetzten Materialien, insbesondere ihrer Viskosität, ihrer Dichte und dgl., wobei es durch Austausch einer oder beider Auslasskanülen von der Auslassseite des Düsenkopfes her binnen kürzester Zeit möglich ist, längere oder kürzere, dickere oder dünnere Kanülen in den Düsenkörper einzusetzen, ohne hierzu eine oder gar beide Materialzuleitungen vom Düsenkopf abzubauen. Sollten also unzufriedenstellende Ergebnisse beim Koextrudieren einer Dichtung beobachtet werden, sollten die Durchmesser- und Dickenverhältnisse der Dichtung kurzfristig geändert werden müssen, kann dies durch Austausch der Kanülen ohne nennenswerte Unterbrechung des Produktionsprozesses schnell erfolgen.

Die Erfindung ist nicht auf das dargestellte und beschriebene Ausführungsbeispiel beschränkt, sondern es sind verschiedene Änderungen und Ergänzungen möglich, ohne den Rahmen der Erfindung zu verlassen. So ist es beispielsweise möglich, auch die äußere Auslasskanüle lediglich axial in einen entsprechend angepassten Kanülensitz einzuschieben und in ihrer Lage mit geeigneten Haltemitteln, beispielsweise einer Klemmschraube, einem O-Ring oder dgl. zu halten. Die Arretierung kann zum Beispiel auch mit Hilfe eines Bajonettverschlusses erfolgen.

## Patentansprüche

1. Koextrusions-Düsenkopf insbesondere für die Koextrusion zweier konzentrisch zueinander auszubringender Dichtungsmaterialien, mit einer Auslassdüse (11; 12, 14; 16, 17) mit einem ersten, einlassseitigen Anschluss (12) für eine erste Materialzuleitung (13) und einem zweiten, einlassseitigen Anschluss (14) für eine zweite Materialzuleitung (15) sowie mit zwei unter Bildung eines Ringspalts (18) konzentrisch zueinander an der Auslassdüse angeordneten oder diese bildenden Auslasskanülen (16, 17), von denen die innere Kanüle (16) mit ihrem Einlassende (19) mit dem ersten, einlassseitigen Anschluss (12) und die äußere Kanüle (17) mit ihrem Einlassende (20) mit dem zweiten einlassseitigen Anschluss (14) kommuniziert, **dadurch gekennzeichnet, dass** beide Auslasskanülen (16, 17) von der Auslassseite (21) der Auslassdüse (11) her auswechselbar am Düsenkopf (10) angeordnet sind.

2. Düsenkopf nach Anspruch 1, **dadurch gekennzeichnet, dass** die innere Kanüle (16) von der Auslassseite (21) des Düsenkopfes (10) mit ihrem Einlassende (19) in einem ersten, im Düsenkopf (10) im Bereich von dessen ersten einlassseitigen Anschluss (12) und/oder der daran angeschlossenen Materialzuleitung (13) ausgebildete Kanülensitz (22) montierbar ist.

3. Düsenkopf nach Anspruch 2, **dadurch gekennzeichnet, dass** der Kanülensitz (22) als Stufenbohrung (24) ausgebildet ist.

4. Düsenkopf nach Anspruch 2 oder 3, **dadurch gekennzeichnet, dass** die innere Kanüle (16) an ihrem Einlassende (19) eine Abstufung (25) aufweist, mit der sie in den Kanülensitz (22) einschiebbar oder einschraubbar ist.

5. Düsenkopf nach einem der Ansprüche 1 bis 4, **dadurch gekennzeichnet, dass** die innere Kanüle (16) im Bereich ihres Einlassendes (19) gegenüber dem Kanülensitz (22) und/oder dem ersten einlassseitigen Anschluss (12) abgedichtet ist.

6. Düsenkopf nach Anspruch 5, **dadurch gekennzeichnet, dass** die Abdichtung mittels mindestens eines umlaufenden Dichtrings, insbesondere eines O-Rings (26) erfolgt.

7. Düsenkopf nach Anspruch 5 oder 6, **dadurch gekennzeichnet, dass** die Abdichtung (26) im Bereich der Abstufung (24; 25) am Kanülensitz (22) und/oder der inneren Kanüle (16) angeordnet ist.

8. Düsenkopf nach einem der Ansprüche 1 bis 7, **dadurch gekennzeichnet, dass** die äußere Kanüle (17) von der Auslassseite (21) des Düsenkopfes (10) mit ihrem Einlassende (20) in einem zweiten im Düsenkopf (10) konzentrisch zur ersten Kanüle (16) ausgebildeten Kanülensitz (29) montierbar ist.

9. Düsenkopf nach Anspruch 8, **dadurch gekennzeichnet, dass** der zweite Kanülensitz (29) eine Gewindebohrung aufweist, in welche die zweite Kanüle (17) einschraubbar ist.

10. Düsenkopf nach einem der Ansprüche 1 bis 9, **dadurch gekennzeichnet, dass** die zweite Materialzuleitung (15) schräg zur Achse (31) der Kanülen (16, 17) verläuft und unter einem Winkel (α) in den zweiten Kanülensitz (29) bzw. den Ringkanal (18) mündet.

11. Düsenkopf nach einem der Ansprüche 1 bis 10, **dadurch gekennzeichnet, dass** die erste Kanüle (16) in ihrer axialen und/oder radialen Lage relativ zur zweiten Kanüle (17) arretierbar ist.

12. Düsenkopf nach Anspruch 11, **dadurch gekennzeichnet, dass** die zweite Kanüle (17) mit mindestens einem radial gegen die Außenwand der ersten, inneren Kanüle (16) anstellbaren Stellelement, insbesondere einer Stellschraube (30) versehen ist.

13. Düsenkopf nach Anspruch 12, **dadurch gekennzeichnet, dass** wenigstens zwei Stellelemente (30) gleichmäßig über den Umfang verteilt an der zweiten Kanüle (17) angeordnet sind.

14. Düsenkopf nach einem der Ansprüche 1 bis 13, **gekennzeichnet durch** erste und/oder zweite Kanülen (16, 17) unterschiedlichen Innen- und/oder Außendurchmessers im Bereich ihrer Auslassenden.
